# EUROPEAN PATENT SPECIFICATION

(11) **EP 2 840 063 B1**
(45) Date of publication and mention of the grant of the patent: **16.09.2015**
(21) Application number: 13181137.4
(22) Date of filing: 21.08.2013
(51) Int. Cl.: C01B 33/40

(54) **METHOD FOR SEPARATION OF SUBMICRON PARTICLES OF ILLITE MINERAL FROM ILLITE CLAY**
VERFAHREN ZUR TRENNUNG VON SUBMIKRONTEILCHEN AUS ILLITMINERAL AUS ILLITTON
PROCÉDÉ DE SÉPARATION DE PARTICULES SUBMICRONIQUES DE MINÉRAL D'ILLITE À PARTIR D'ARGILE ILLITE

(43) Date of publication of application: 25.02.2015
(73) Proprietor: Latvijas Universitate, 1586 Riga (LV)
(72) Inventor: KOSTJUKOVS, Juris, LV-1003 Riga (LV); TRUBACA-BOGINSKA, Anna, LV-1016 Riga (LV); ACTINS, Andris, LV-3708 Salaspils (LV)
(74) Representative: Fortuna, Aleksandra

(56) References cited:
- EP-A1- 2 465 820
- US-A- 2 946 657
- RICHARD BERRY ET AL: "Separation of Illite and Chlorite in Clays by Electromagnetic Techniques", CLAY MINERALS, vol. 8, no. 2, 1 January 1969 (1969-01-01) , pages 201-212, XP055104796, ISSN: 0009-8558, DOI: 10.1180/claymin.1969.008.2.08

## Description

### Technical Field

The invention relates to separation of submicron particles of illite mineral from illite clay.

### Background Art

Illite (also known as hydromica or hydromuscovite) is a non-expanding, clay-sized, micaceous mineral. It is common in sediments, soils, and argillaceous sedimentary rocks as well as in some low grade metamorphic rocks. The cation exchange capacity of illite is about 20 - 30 meq/100 g, which is smaller than that of smectite. Submicron particles of illite minerals are e.g. used in polymer-clay nanocomposites as additives improving thermal and mechanical strength of polymers, reducing their gas permeability, as well as decreasing polymer crystallisation. Another example of use of submicron particles of illite minerals is us as catalysts in organic synthesis for preparation of high temperature grease.

There are known many different methods for separation of submicron particles of illite mineral from illite clay: electrophoretic separation and fractionation of clay mixtures, purification of illite by the triboelectrostatic separation, purification of clay by selective flocculation, chemical process for fractionating mineral particles based on particle size and mechanical fractionation. Disadvantage of these methods is their relative inefficiency.

There is also known method for obtaining smectites from clay having low contents of smectites (EP 2465820) including the following steps: mixing clay having low contents of smectites in activator - phosphate-aqueous solution or mixing clay having low contents of smectites with activator in water, the sedimentation of the resultant suspension, preferably so long to precipitate silica particles, which are larger than one micron and the rest of the ballast; adding the coagulant - a compound containing one or more imine (>C=N-) group compounds in acidic medium (pH 2-4) to the suspension obtained; separation of the coagulated smectites from the solution. As a result of using phosphates as activators according to the known method, the chemically modified Na-smectites, rather than raw Ca-smectites are obtained. The activators according to the known method stabilize smectite suspension and modify Ca-rich smectites to Na-smectites. Also the known method and coagulant cannot be effectively used for separation of submicron particles of illite mineral from illite clay.

There is also known a method for separating illite for geochemical analyses (US2946657).

### Disclosure of Invention

The aim of the invention is to eliminate the disadvantages of the prior art and to provide an effective method for separation of submicron particles of illite mineral from illite clay.

The aim is achieved by the proposed method for separation of submicron particles of illite mineral from illite clay, comprising the following steps: (i) mixing of illite clay in dispersant aqueous solution or mixing of illite clay and dispersant in water, wherein the dispersant is a pyrophosphate or polyphosphate and weight ratio of illite clay, water and dispersant is from 1:8:0.05 to 1:16:0.15; (ii) sedimentation of the resultant suspension, preferably so long to precipitate particles which are larger than one micron and the rest of the ballast; (iii) addition of a coagulant composition formed from a saturated solution of hydrazine hydrogen chloride, hydrochloride acid and acetone in weight ratio from 1:1:4 to 1:1:6 to the resultant suspension; (iv) separation of submicron particles of illite mineral from the solution, containing the potential dispersant and coagulant residues. The separation of submicron particles of illite mineral from the solution in step (iv) may be carried out by filtering or centrifugation of the coagulum obtained in previous step. After filtering or centrifugation step submicron particles of clay are preferably washed with acetone, isopropyl alcohol, or ethanol to remove residues of the coagulant composition.

According to another aspect of the invention a coagulant adapted for use in separation of submicron particles of illite mineral from illite clay is offered, the coagulant being formed from a saturated solution of hydrazine hydrogen chloride, hydrochloride acid and acetone in weight ratio from 1:1:4 to 1:1:6.

The proposed method allows effective separation of submicron particles of illite mineral from illite clay without considerable loss of submicron particles of illite mineral, free of undesirable impurities of organic coagulants and much quicker, if compared with prior art solutions.

### Examples of Implementation of Invention

### Example 1

50.0 g of Devonian clay (Lode deposit, Latvia) is weighted, 2.5 g of sodium tripolyphosphate (Na₅P₃O₁₀) and 800 mL of water is added (weight ratio of Devonian clay : water : Na₅P₃O₁₀ is 1:16:0.05). The resultant suspension is stirred for 1 hour and left for sedimentation. After two days submicron fraction is separated from the coarse fraction (> 1µm) by decantation. Submicron illite clay fraction is coagulated with a coagulant (wherein weight ratio of saturated hydrazine hydrogen chloride : acetone : hydrochloric acid - 1:1:6), filtered, washed with acetone and dried at 70°C. The yield of submicron illite fraction is 8.9 g (∼18%).

### Example 2

15 g of Devonian clay (Lode deposit, Latvia) is weighted, 0.75 g of sodium tripolyphosphate (Na₅P₃O₁₀) and 200 mL of water is added (weight ratio of Devonian clay : water : Na₅P₃O₁₀ is 1:13:0.05). The resultant suspension is stirred for 40 minutes and left for sedimentation. After twenty four hours submicron fraction is separated from the coarse fraction by decantation. Submicron illite clay fraction is coagulated with a coagulant (wherein weight ratio of saturated hydrazine hydrogen chloride : acetone : hydrochloric acid - 1:1:5), filtered, washed with acetone and dried at 90°C. The yield of submicron illite fraction is 2.6 g (∼17%).

### Example 3

15 g of Devonian clay (Lode deposit, Latvia) is weighted, 1 g of sodium tripolyphosphate (Na₅P₃O₁₀) and 210 mL of water is added (weight ratio of Devonian clay : water : Na₅P₃O₁₀ is 1:14:0.07). The resultant suspension is stirred for 40 minutes and left for sedimentation. After 7 days submicron fraction is separated from the coarse fraction by decantation. Submicron illite clay fraction is coagulated with a coagulant (wherein weight ratio of saturated hydrazine hydrogen chloride : acetone : hydrochloric acid - 1:1:5), filtered, washed with acetone and dried at 90°C. The yield of submicron illite fraction is 1.5 g (∼10%).

### Example 4

15 g of Quaternary clay (Rauna deposit, Latvia) is weighted, 2.25 g of sodium tripolyphosphate (Na₅P₃O₁₀) and 200 mL of water is added (weight ratio of Quaternary clay : water : Na₅P₃O₁₀ is 1:13:0.15). The resultant suspension is stirred for 40 minutes and left for sedimentation. After twenty four hours submicron fraction is separated from the coarse fraction by decantation. Submicron illite clay fraction is coagulated with a coagulant (wherein weight ratio of saturated hydrazine hydrogen chloride : acetone : hydrochloric acid - 1:1:5), filtered, washed with acetone and dried at 90°C. The yield of submicron illite fraction is 4.6 g (∼31%).

### Example 5

15 g of Quaternary clay (Rauna deposit, Latvia) is weighted, 1.5 g of sodium tripolyphosphate (Na₅P₃O₁₀) and 200 mL of water is added (weight ratio of Quaternary clay : water : Na₅P₃O₁₀ is 1:13:0.1). The resultant suspension is stirred for 40 minutes and left for sedimentation. After 14 days submicron fraction is separated from the coarse fraction by decantation. Submicron illite clay fraction is coagulated with a coagulant (wherein weight ratio of saturated hydrazine hydrogen chloride : acetone : hydrochloric acid - 1:1:5), filtered, washed with acetone and dried at 90°C. The yield of submicron illite fraction is 3.2g (∼21%).

The yield of submicron illite fractions depends on the initial amount of deposits of clay.

75 g g of Quaternary clay (Rauna deposit, Latvia) is weighted, 5 g of sodium pyrophosphate decahydrate and 600 mL of water is added (weight ratio of Quaternary clays : water : sodium pyrophosphate decahydrate is 1:8:0.07). The resultant suspension is stirred for 1 hour and left for sedimentation. After twenty four hours submicron fraction is separated from the coarse fraction by decantation. Submicron illite clay fraction is coagulated with a coagulant (wherein weight ratio of saturated hydrazine hydrogen chloride : acetone : hydrochloric acid - 1:1:5), filtered, washed with acetone and dried at 90°C. The yield of submicron illite fractions is 21 g (∼28%).

The yield of submicron illite fractions depends on the initial amount of deposits of clay.

## Claims

1. A method for separation of submicron particles of illite mineral from illite clay, comprising the following steps:
(i) mixing of illite clay in dispersant aqueous solution or mixing of illite clay and dispersant in water, wherein the dispersant is a pyrophosphate or polyphosphate and weight ratio of illite clay, water and dispersant is from 1:8:0.05 to 1:16:0.15;
(ii) sedimentation of the resultant suspension, preferably so long to precipitate particles which are larger than one micron and the rest of the ballast;
(iii) addition of a coagulant composition formed from a saturated solution of hydrazine hydrogen chloride, hydrochloride acid and acetone in weight ratio from 1:1:4 to 1:1:6 to the resultant suspension;
(iv) separation of submicron particles of illite mineral from the solution, containing the potential dispersant and coagulant residues.

2. The method according to claim 1, wherein separation of submicron particles of illite mineral from the solution, containing the potential dispersant and coagulant residues is carried out by filtering or centrifugation of the coagulum obtained in previous step.

3. The method according to any one of the preceding claims, wherein after the filtering or centrifugation step submicron particles of clay are washed with acetone, isopropyl alcohol, or ethanol.

4. A coagulant adapted for use in separation of submicron particles of illite mineral from illite clay, the coagulant being formed from a saturated solution of hydrazine hydrogen chloride, hydrochloride acid and acetone in weight ratio from 1:1:4 to 1:1:6.

5. Use of a saturated solution of hydrazine hydrogen chloride, hydrochloride acid and acetone in weight ratio from 1:1:4 to 1:1:6 for separation of submicron particles of illite mineral from illite clay.

## Patentansprüche

1. Eine Methode zum Trennen von submikronen Partikeln von einem Illit-Mineral aus Illit-Tonerde, bestehend aus folgenden Schritten:
(i) Vermischen der Illit-Tonerde in einer wässrigen Dispersionslösung oder Vermischen der Illit-Tonerde mit Dispersionsmittel in Wasser, wobei das Dispersionsmittel ein Pyrophosphat oder Polyphosphat sein muss und das Gewichtsverhältnis von Illit-Tonerde, Wasser und Dispersionsmittel 1:8:0.05 bis 1:16:0.15 beträgt.
(ii) Absetzen der resultierenden Suspension, vorzugsweise so lange, um Teilchen, die größer als ein Mikrometer sind und des Rest des Ballasts auszufällen;
(iii) Zugabe einer Koagulanlösung bestehend aus einer gesättigten Lösung aus Hydrazin-Choridwasserstoff, Hydrochloridsäure und Aceton in einem Gewichtsverhältnis von 1:1:4 bis 1:1:6 zur resultierenden Suspension;
(iv) Trennen der submikronen Partikel des Illit-Minerals von der Lösung, die die potentiellen Dispersions- und Koagulationsrückstände enthält.

2. Verfahren nach Anspruch 1, wobei das Trennen der submikronen Partikel des Illit-Minerals von der Lösung, die die potentiellen Dispersions- und Koagulationsrückstände enthält, durch Filtrieren oder Zentrifugieren des aus dem vorgehenden Schritt resultierenden Koagulums erfolgt.

3. Verfahren nach einem der vorhergehenden Ansprüche, wobei nach dem Filter- oder Zentrifugierschritt submikrone Tonpartikel mit Aceton, Isopropylalkohol oder Ethanol gewaschen werden.

4. Ein für das Trennen von submikronen Partikeln vom Illit-Mineral aus Illit-Tonerde adaptiertes und verwendetes Koagulansmittel, bestehend aus einer gesättigten Lösung von Hydrazin-Chlorwasserstoff, Hydrochloridsäure und Aceton in einem Gewichtsverhältnis von 1:1:4 bis 1:1:6.

5. Verwendung einer gesättigten Lösung aus Hydrazin- Chlorwasserstoff, Hydrochloridsäure und Aceton in einem Gewichtsverhältnis von 1:1:4 bis 1:1:6 für das Trennen von submikronen Partikeln von einem Illit Mineral aus Illit-Tonerde.

## Revendications

1. Procédé de séparation de particules submicroniques de minéral illite d'une argile illite, comprenant les étapes suivantes :
(i) le mélange d'argile illite dans une solution aqueuse de dispersant ou le mélange d'argile illite et de dispersant dans de l'eau, dans lequel le dispersant est un pyrophosphate ou un polyphosphate et le rapport pondéral de l'argile illite, de l'eau et du dispersant va de 1:8:0,05 à 1:16:0,15 ;
(ii) la sédimentation de la suspension résultante, de préférence assez longtemps pour précipiter les particules qui sont plus grandes qu'un micromètre et le reste de la charge ;
(iii) l'addition d'une composition de coagulant formée à partir d'une solution saturée de chlorhydrate d'hydrazine, d'acide chlorhydrique et d'acétone dans un rapport pondéral allant de 1:1:4 à 1:1:6 à la suspension résultante ;
(iv) la séparation des particules submicroniques de minéral illite de la solution, contenant les résidus potentiels de dispersant et de coagulant.

2. Procédé selon la revendication 1, dans lequel la séparation des particules submicroniques de minéral illite de la solution, contenant les résidus potentiels de dispersant et de coagulant est effectuée par filtrage ou centrifugation du coagulum obtenu dans l'étape précédente.

3. Procédé selon l'une quelconque des revendications précédentes, dans lequel après l'étape de filtrage ou de centrifugation, les particules submicroniques d'argile sont lavées avec de l'acétone, de l'alcool isopropylique ou de l'éthanol.

4. Coagulant adapté pour une utilisation dans la séparation de particules submicroniques de minéral illite d'une argile illite, le coagulant étant formé d'une solution saturée de chlorhydrate d'hydrazine, d'acide chlorhydrique et d'acétone dans un rapport pondéral allant de 1:1:4 à 1:1:6.

5. Utilisation d'une solution saturée de chlorhydrate d'hydrazine, d'acide chlorhydrique et d'acétone dans un rapport pondéral allant de 1:1:4 à 1:1:6 pour la séparation des particules submicroniques de minéral illite d'une argile illite.
